(19) Europäisches Patentamt
European Patent Office
Office européen des brevets

(11) **EP 2 694 996 B1**

(12) **EUROPÄISCHE PATENTSCHRIFT**

(45) Veröffentlichungstag und Bekanntmachung des Hinweises auf die Patenterteilung:
**25.03.2015 Patentblatt 2015/13**

(51) Int Cl.:
***G01S 17/10*** *(2006.01)* ***G01S 7/487*** *(2006.01)*

(21) Anmeldenummer: **11767596.7**

(22) Anmeldetag: **15.09.2011**

(86) Internationale Anmeldenummer:
**PCT/AT2011/000377**

(87) Internationale Veröffentlichungsnummer:
**WO 2012/135874 (11.10.2012 Gazette 2012/41)**

(54) **VERFAHREN ZUR ENTFERNUNGSMESSUNG**

METHOD FOR MEASURING DISTANCE

PROCÉDÉ DE MESURE DE LA DISTANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.04.2011 AT 4942011**

(43) Veröffentlichungstag der Anmeldung:
**12.02.2014 Patentblatt 2014/07**

(73) Patentinhaber: **Riegl Laser Measurement Systems GmbH**
**3580 Horn (AT)**

(72) Erfinder:
• **RIEGER, Peter**
**A-3824 Grossau (AT)**
• **ULLRICH, Andreas**
**A-3003 Gablitz (AT)**

(74) Vertreter: **Weiser, Andreas**
**Patentanwalt**
**Kopfgasse 7**
**1130 Wien (AT)**

(56) Entgegenhaltungen:
**EP-A1- 2 053 427      EP-A2- 1 413 896**
**EP-A2- 1 903 302      WO-A2-03/016944**
**DE-A1- 19 952 552     DE-A1- 19 963 005**
**US-A1- 2002 041 370**

## Beschreibung

Die vorliegende Erfindung betrifft ein Verfahren zur Entfernungsmessung von Umgebungszielen durch Laufzeitmessung von daran reflektierten Impulsen. Die Impulse können beliebiger Art sein, z.B. Lichtimpulse, insbesondere Laserimpulse, Funkimpulse, insbesondere Radarimpulse, Schallimpulse od. dgl. Die Erfindung betrifft ferner ein Verfahren zum Laserscannen durch Richten von Laserimpulsen fortlaufend auf verschiedene Umgebungsziele.

Die US 2002/0413720 A1 offenbart einen Laser-Abstandsmesser mit mehreren Empfangszeitfenstern und einer Variation des Sendeimpulsstandes. Die EP 1 413 896 A2 zeigt eine zufallscodierte Variation des Sendeimpulsabstand mit dem Ziel, dass sich die nicht zu einem Empfangszeitfenster gehörenden Impulse über mehrere Impulsmessungen bei Auf-Integration "verschmieren". Die EP 199 52 552 A1 verwendet eine zufallscodierte optische Impulsfolge zur Abstandsmessung, wobei die Zufallscodierung als "Pseudo-Random Code" zur Adressierung der Messungen verwendet wird.

Moderne Impulslaufzeit-Entfernungsmesser wie Laserentfernungsmesser bzw. -scanner arbeiten mit hoher Impulsleistung über große Entfernungen und/oder hoher Impulswiederholungsrate zur raschen Erstellung einer Vielzahl von Entfernungsmesspunkten der Umgebung. In beiden Fällen kann sich die Situation ergeben, dass der nächste Impuls schon ausgesandt wird, noch bevor die Reflexion des letzten Impulses empfangen wurde, sodass die eintreffenden Empfangsimpulse nicht mehr eindeutig ihrem jeweiligen Sendeimpuls zugeordnet werden können. Dies ist als "multiple time around"-(MTA) bzw. "multiple pulses in the air"-Problem bekannt. Die maximale Größe $d_{max}$ des eindeutig vermessbaren Entfernungsbereiches, der sog. MTA-Zone, ergibt sich dabei aus der Impulswiederholungsrate (pulse repetition rate) PRR und der Lichtgeschwindigkeit c zu

$$d_{max} = c/(2 \cdot PRR).$$

Laserscanner moderner Bauart bieten beispielsweise Impulswiederholungsraten von bis zu 400 kHz, was einer MTA-Zonengröße $d_{max}$ von etwa 375 m entspricht. Wird diese Messdistanz überschritten, ist das Messergebnis aufgrund der nicht eindeutigen Zuordenbarkeit der Sende- und Empfangsimpulse in der Regel nicht korrekt interpretierbar.

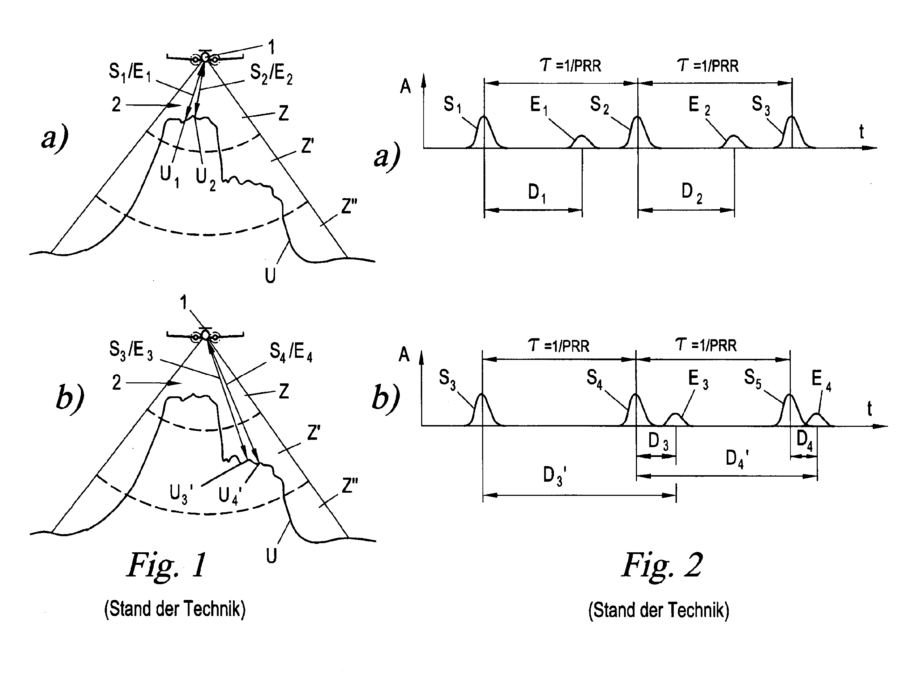

Die Fig. 1 und 2 zeigen diese Situation im Detail. Von einem flugzeuggestützten Laserscanner 1 wird ein gepulster Lasermessstrahl 2 abtastend über eine Umgebung U mit einzelnen Umgebungszielen (Abtastpunkten) $U_1$, $U_2$,... geführt, z.B. zeilenweise fächerförmig. Aus Laufzeitmessungen an den einzelnen ausgesandten Impulsen $S_1$, $S_2$,..., die nach der Umgebungsreflexion als Empfangsimpulse $E_1$, $E_2$,... zurückgehalten werden, können die Zielentfernungen $D_1$, $D_2$,... zu den einzelnen Umgebungszielen $U_1$, $U_2$,... bestimmt werden.

Die Fig. 1a und 2a zeigen eine beispielhafte Situation bei der Vermessung von Umgebungszielen $U_1$, $U_2$, die in der ersten, dem Laserscanner 1 nächstgelegenen MTA-Zone Z liegen: Der zum Sendeimpuls $S_1$ gehörende Empfangsimpuls $E_1$ wird zurückerhalten, bevor der nächste Sendeimpuls $S_2$ im Zeitabstand $\tau = 1/PRR$ ausgesandt wird, usw. usf.

Die Fig. 1b und 2b zeigen eine beispielhafte Situation, wenn Umgebungsziele $U_3$', $U_4$' in der zweiten MTA-Zone Z' liegen: Hier wird der zum Sendeimpuls $S_3$ gehörende Empfangsimpuls $E_3$ erst empfangen, nachdem bereits der zweite Sendeimpuls $S_2$ ausgesandt wurde. Zur Bestimmung der korrekten Entfernung $D_3$' des Umgebungsziels $U_3$' in der Zone Z' ist es notwendig, den Empfangsimpuls $E_3$ korrekt dem Sendeimpuls $S_3$ zuzuordnen; wird der Empfangsimpuls $E_3$ fälschlich dem unmittelbar vorhergehenden Sendeimpuls $S_4$ zugeordnet, ergibt sich eine falsche Zielentfernung $D_3$ in der falschen MTA-Zone Z, anstelle der richtigen Zielentfernung $D_3$' in der richtigen MTA-Zone Z'.

Zur richtigen gegenseitigen Zuordnung der Sende- und Empfangsimpulse und damit Überwindung der MTA-Zonengrenzen für eindeutige Entfernungsmessungsergebnisse sind verschiedenste Verfahren bekannt. Eine erste Möglichkeit besteht darin, bei der Planung der Vermessungsaufgabe darauf zu achten, dass alle zu erwartenden Umgebungsziele in ein- und derselben MTA-Zone liegen, um die korrekte Zuordnung vornehmen zu können. Dieses Verfahren ist naturgemäß nur für spezielle Messaufgaben anwendbar und z.B. für hochmobile oder weiträumige Vermessungs- oder Scanaufgaben, z.B. das luftgestützte Scannen von Gebirgen oder das terrestrische fahrzeuggestützte Scannen, ungeeignet.

Eine andere Gruppe von Verfahren beruht darauf, die einzelnen Sendeimpulse durch Variation ihrer Polarisation, Amplitude oder Wellenlänge voneinander unterscheidbar zu machen, um die Empfangsimpulse entsprechend zuordnen zu können. Diese Verfahren sind jedoch entweder nur für wenige "pulses in the air" geeignet oder erfordern aufwändig codierte Impulse, was jeweils die Impulswiederholungsrate und den vermessbaren Entfernungsbereich begrenzt und die Messzeit verlängert.

Die Erfindung setzt sich zum Ziel, ein Verfahren zum Entfernungsmessen bzw. Scannen zu schaffen, welches eine automatische Zuordnung und damit richtige Vermessung von Umgebungszielen in beliebigen MTA-Zonen ermöglicht. Dieses Ziel wird mit einem Verfahren der einleitend genannten Art erreicht, welches umfasst:

Aussenden von Impulsen mit einem Impulsabstand, der entsprechend einem Modulationssignal variiert wird, als Sendeimpulse und begleitendes Aufzeichnen der reflektierten Impulse als Empfangsimpulse,

Bestimmen einer ersten Folge von Entfernungs-messwerten aus Laufzeiten zwischen Sendeimpul-sen und solchen Empfangsimpulsen, die jeweils innerhalb eines ersten Zeitfensters nach jedem Sendeimpuls empfangen werden, und Bestimmen zumindest einer zweiten Folge von Entfernungsmesswerten aus Laufzeiten zwischen Sendeimpulsen und solchen Empfangsimpulsen, die jeweils innerhalb eines zweiten Zeitfensters nach jedem Sendeimpuls empfangen werden, und Ermitteln jener Folge von Entfernungsmesswerten, welche durch das Modulationssignal am geringsten beeinflusst ist, als Ergebnis der Entfernungsmessung.

Es sei erwähnt, dass das Variieren des Impulsabstandes und damit der Impulswiederholungsrate (Reziprokwert des Impulsabstandes) als sog. "PRR-Modulation" auf dem Gebiet der Radartechnik an sich bekannt ist, um "Geisterechos" ("ghosting") von Sendeimpulsen außerhalb der richtigen MTA-Zone zu identifizieren.

Die vorliegende Erfindung beruht auf der überraschenden Erkenntnis, dass durch eine signalanalytische Auswertung zumindest zweier möglicher Folgen ("Kandidatenfolgen") von Entfernungsmesswerten, wie sie für verschiedene Zeitfenster-Aufzeichnungsvarianten von Empfangsimpulsen erhalten werden, die "richtige" Entfernungsmesswertfolge automatisch ermittelt werden kann, u.zw. indem die Einflüsse des Impulsabstand- bzw. PRR-Modulationssignals in den Kandidatenfolgen detektiert werden. In Abkehr von bisher bekannten Verfahren werden verschiedenste mögliche, MTA-Zo-nenzuordnungen entsprechende Entfernungsmesswert-folgen auf das zuanfangs eingespeiste Modulationssignal hin ausgewertet.

Bevorzugt ist die Länge der ersten und zweiten Zeitfenster jeweils etwa gleich dem durchschnittlichen Impulsabstand der Sendeimpulse. Dadurch decken die Zeitfenster jeweils genau eine MTA-Zone ab. Besonders günstig ist es ferner, wenn die ersten und zweiten Zeitfenster zueinander jeweils um etwa ein ganzzahliges Vielfaches des durchschnittlichen Impulsabstandes der Sendeimpulse versetzt sind, sodass die vermessbaren MTA-Zonen weitgehend lückenlos aneinander angeschlossen werden können.

Das Verfahren der Erfindung lässt sich auf eine beliebige Anzahl von MTA-Zonen erweitern, indem mehr als zwei Paarungen bzw. Zuordnungen von Sende- und Empfangsimpulsfolgen durch Verwendung von mehr als zwei unterschiedlichen Zeitfenstern gebildet und dementsprechend mehr als zwei Kandidatenfolgen von Ent-fernungsmesswertfolgen erzeugt werden, aus denen die vom Modulationssignal geringstbeeinflusste ermittelt wird. Je größer die Periodendauer des Modulationssignals und je mehr verschiedene Zeitfenster dadurch möglich sind, desto größer ist die Anzahl an MTA-Zonen, welche auf diese Weise detektiert und zugeordnet werden können. In diesem Sinne ist gemäß einer ersten bevorzugten Ausführungsform das eingespeiste Modulationssignal ein Zufallssignal (Rauschen), d.h. von "unendlicher" Periodendauer.

Da in der Praxis eine automatische Auswertung einer begrenzten Zahl von MTA-Zonen ausreicht, kann das Modulationssignal auch lediglich ein Pseudo-Zufallssignal mit einer begrenzten Periodendauer (Muster- bzw. Codelänge) sein. Besonders geeignet ist hierfür ein Signal auf Basis eines Barker-Codes, welcher vorteilhafte Eigenschaften für die Selektion der Kandidaten-Ent-fernungsmesswertfolgen mitbringt.

Das Ermitteln der von der PRR- bzw. Impuls-abstands-Modulation geringst-beeinflussten Entfer-nungsmesswertfolge kann auf verschiedenste Arten erfolgen. Gemäß einer ersten bevorzugten Ausführungsform werden dazu Signalenergien der verschiedenen Kandidaten-Entfernungsmesswertfolgen berechnet und die Folge mit der geringsten Signalenergie ausgewählt. Diese Ausführungsform nützt den Umstand aus, dass eine Impulsabstands-Modulation stets auch eine Erhö-hung der Signalenergie jener Entfernungsmesserwert-folgen, in denen sie sich niederschlägt, zur Konsequenz hat.

Eine bevorzugte Variante dieser Ausführungsform besteht darin, Autokorrelationen der Entfernungsmesswertfolgen zu berechnen und jene Folge als die korrekte auszuwählen, welche die höchste Autokorrelation zeigt. Diese Variante beruht auf der Erkenntnis, dass die geringstbeeinflusste Kandidatenfolge die größte Selbstähnlichkeit (Autokorrelation) besitzt.

Eine weitere bevorzugte Alternative besteht darin, Kreuzkorrelationen zwischen den Kandidaten-Ent-fernungsmesswertfolgen und dem Modulationssignal zu berechnen und die Folge mit der geringsten Kreuzkorrelation als das korrekte Entfernungsmessergebnis auszuwählen.

Noch eine weitere bevorzugte Variante besteht darin, dass die Entfernungsmesswertfolgen frequenzanalysiert werden und die Folge mit den geringsten hochfrequenten Anteilen als die richtige ausgewählt wird. Diese Variante beruht auf der Annahme, dass eine modulationsbedingte "Rauhigkeit" in den "falschen" Entfernungsmesswertfolgen üblicherweise hochfrequenter ist als es der tatsächlichen Rauhigkeit der vermessenen Umgebung entspricht.

Gemäß einem ersten Aspekt der Erfindung kann das Verfahren zum MTA-korrekten Entfernungsmessen eines Umgebungszieles verwendet werden, indem die Sendeimpulse fortlaufend auf ebendieses selbe Umgebungziel gerichtet werden.

Gemäß einem zweiten Aspekt der Erfindung kann das Verfahren auch zum Laserscannen eingesetzt werden, indem die Sendeimpulse Laserimpulse sind und fortlaufend auf verschiedene Umgebungsziele gerichtet werden, um eine ganze Umgebung punktweise abzutasten bzw. zu scannen. Laserimpulse lassen sich durch rotierende Spiegel od. dgl. besonders einfach auf unterschiedliche Ziele richten.

Die Erfindung wird nachstehend anhand von in den beigeschlossenen Zeichnungen dargestellten Ausführungsbeispielen näher erläutert. In den Zeichnungen zeigt:

Fig. 1 schematisch verschiedene Reflexionssituationen eines gepulsten Laserabtaststrahls an Umgebungszielen, die in verschiedenen MTA-Zonen liegen, nach dem Stand der Technik;

Fig. 2 beispielhafte Zeitdiagramme von Sende- und Empfangsimpulsen für die Reflexionssituationen von Fig. 1 nach dem Stand der Technik;

Fig. 3 beispielhafte Zeitdiagramme von Sende- und Empfangsimpulsen im Zusammenhang mit verschiedenen Schritten des Verfahrens der Erfindung;

Fig. 4 beispielhafte Kandidatenfolgen von Entfernungsmesswerten, die während des Verfahrens der Erfindung anfallen, im Detail;

Fig. 5 verschiedene Varianten von Zuordnungsschritten zwischen Sende- und Empfangsimpulsen im Rahmen des Verfahrens der Erfindung;

Fig. 6 eine Zusammenschau der Entfernungsmesswertfolgen von Fig. 5 über eine größere Anzahl von Messwerten;

Fig. 7 eine erste Variante der Auswertung der Entfernungsmesswertfolgen von Fig. 6 durch Berechnen von Signalenergien, hier mittels einer gleitenden Standardabweichung;

Fig. 8 eine zweite Variante der Auswertung der Entfernungsmesswertfolgen von Fig. 6 durch Berechnen von Signalenergien, hier mittels Autokorrelation;

Fig. 9 eine dritte Variante der Auswertung der Entfernungsmesswertfolgen von Fig. 6 mittels Analyse ihrer Autokorrelationseigenschaften; und

Fig. 10 die Variante von Fig. 9 bei Verwendung eines Barker-Codes als Modulationssignales anstelle eines Rauschsignals.

Die Fig. 1 und 2 zeigen die Impulszuordnungsproblematik von MTA-zonenüberschreitenden Entfernungsmess- bzw. Scanbereichen und wurden bereits eingangs erörtert. Zur Überwindung dieses Problems dient das nun folgend beschriebene Verfahren, welches auf einer signalanalytischen Auswertung einer Vielzahl von Sendeimpulsen $S_1$, $S_2$, $S_3$,..., allgemein $S_m$, und Empfangsimpulsen $E_1$, $E_2$, $E_3$,..., allgemein $E_n$, beruht.

Die folgende Verfahrensbeschreibung nimmt konkret auf Laserimpulse als Sende- und Empfangsimpulse $S_m$, $E_n$ Bezug. Es versteht sich jedoch, dass die Sende- und Empfangsimpulse $S_m$, $E_n$ beliebiger Art sein können, beispielsweise Schallimpulse in einem Sonargerät, Lichtimpulse in einer Time-of-Flight-Kamera (photonic mixing device, PMD), Radarimpulse in einem Radarentfernungsmesser oder -scanner, elektrische Impulse in Leitungsmessgeräten usw. oder eben Laserimpulse in einem Laserentfernungsmesser oder -scanner. Das hier geschilderte Verfahren ist demgemäß allgemein auf beliebige Arten von Impulslaufzeit-Messverfahren anwendbar.

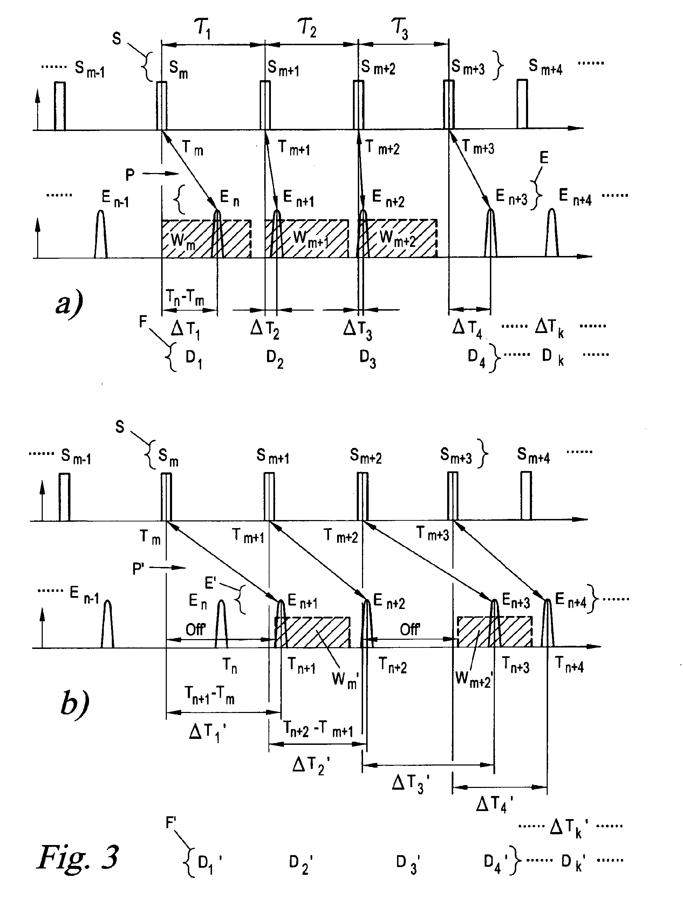

Gemäß Fig. 3a wird eine Vielzahl von Laser-Sendeimpulsen $S_m$ vom Laserentfernungsmesser bzw. -scanner 1 auf die Umgebung U (Fig. 1) ausgesandt, um durch Reflexionen der Sendeimpulse $S_m$ an Umgebungszielen $U_i$ eine Vielzahl von Empfangsimpulsen $E_n$ zurückzuerhalten. Aus der Laufzeit $\Delta T_k$ jedes umgebungsreflektierten Laserimpulses, d.h. der Differenz zwischen dem Empfangszeitpunkt $T_n$ des Empfangsimpulses $E_n$ und dem Sendezeitpunkt $T_m$ des zugrundeliegenden Sendeimpulses $S_m$, lässt sich in bekannter Weise die Entfernung $D_k = c\Delta T_k/2$ vom Entfernungsmesser bzw. Scanner 1 bis zum vermessenen Umgebungsziel $U_i$ berechnen. Die Laufzeiten $\Delta T_k$ und Entfernungsmesswerte $D_k$ sind einander direkt proportional und werden im Folgenden daher auch synonym und austauschbar verwendet.

Unter der Annahme einer bestimmten Zuordnung ("Paarung") P eines Empfangsimpulses $E_n$ zu einem Sendeimpuls $S_m$ - worauf später noch ausführlicher eingegangen wird - lassen sich für jedes Paar von Sendeimpuls $S_m$ und Empfangsimpuls $E_n$ eine Laufzeit $\Delta T_k$ und damit ein Entfernungsmesswert $D_k$ berechnen. Für eine Folge S von Sendeimpulsen $\{S_m, S_{m+1}, S_{m+2},... S_{m+N}\}$ und eine Folge E von Empfangsimpulsen $\{E_n, E_{n+1}, E_{n+2},... E_{m+N}\}$ kann so eine Folge F von Entfernungsmesswerten $\{D_1, D_2, D_3,... D_k,... D_N\}$ berechnet werden.

Das hier beschriebene Verfahren lässt sich sowohl zum Entfernungsmessen verwenden, wenn die Sendeimpulse $S_m$ fortlaufend auf ein und dasselbe Umgebungsziel $U_i$ gerichtet werden, als auch zum Scannen, wenn die Sendeimpulse $S_m$ fortlaufend auf verschiedene Umgebungsziele $U_i$ gerichtet werden, z.B. zeilenweise abtastend über die Umgebung U geführt. In ersterem Falle werden eine Vielzahl von Entfernungsmesswerten $D_k$ ein- und desselben Umgebungsziels $U_i$ erhalten, welche anschließend - z.B. von Ausreisserwerten bereinigt - gemittelt werden können, um ein Endresultat der Entfernung D zu erhalten. Im zweiten Falle kann aus der Vielzahl von Entfernungsmesswerten $D_k$ und der im Scanner 1 bekannten Aussenderichtung der Sendeimpulse $S_m$ ein diskretes Oberflächenmodell der Umgebung U (eine "Punktewolke") erstellt werden, wie dem Fachmann z.B. auf dem Gebiet des Laserscannens geläufig.

Fig. 3b zeigt eine andere Form von Zuordnung bzw. Paarung P' zwischen Sendeimpulsen $S_m$ und Empfangsimpulsen $E_n$. Die Zuordnung P' geht von der Annahme aus, dass sich die Umgebungsziele $U_i$ in der zweiten MTA-Zone Z' (Fig. 1) befinden, siehe die beispielhaften Umgebungsziele $U_3$' und $U_4$'. In der Zuordnung P' wird ein Empfangsimpuls $E_n$ nicht mehr dem unmittelbar vorangegangenen Sendeimpuls $S_m$ sondern dem vorletzten Sendeimpuls $S_{m-1}$ zugeordnet, um aus der Differenz der Empfangs- und Sendezeitpunkte $T_n - T_{m-1}$, $T_{n+1} - T_m$ usw. eine Folge von Laufzeiten $\Delta T_1'$, $\Delta T_2'$,... $\Delta T_k'$,... und damit eine neue Folge F' von Entfernungsmesswerten $\{D_1', D_2', D_3',... D_k',... \}$ zu erhalten. Liegen die ver-

messenen Umgebungsziele $U_i$ in der der Zuordnung P' entsprechenden "richtigen" MTA-Zone Z', gibt die Folge F' mit den Entfernungsmesswerten $D_k'$ deren Entfernungen korrekt wieder.

Im allgemeinen ist die MTA-Zone Z, Z', Z" usw., in welcher die Umgebungsziele $U_i$ liegen, nicht bekannt. Um auch in diesem Fall die richtige MTA-Zonenlage zu erkennen und dadurch die richtigen Entfernungsmesswerte $D_k$, $D_k'$, $D_k"$ usw. zu ermitteln, wird das folgende Verfahren angewandt.

Wie in den Fig. 3a und 3b dargestellt, werden die Sendeimpulse $S_m$ nicht mit einem konstanten Impulsabstand $\tau$ = 1/PRR, d.h. einer konstanten Impulswiederholungsrate PRR ausgesandt, sondern mit einem von Sendeimpuls zu Sendeimpuls variierenden Impulsabstand $\tau_1$ = $1/PRR_1$, $\tau_2$ = $1/PRR_2$ usw., allgemein $\tau_i$ = $1/PRR_i$. Mit anderen Worten wird die Impulswiederholungsrate PRR bzw. der Impulsabstand $\tau$ gleichsam mit einem Signal moduliert ("pulspositionsmoduliert"), um die genannte Variation der Impulsabstände $\tau_i$ zu erzielen.

Die Variation des Impulsabstandes $\tau_i$ von Impuls zu Impuls ist bevorzugt nur geringfügig, beispielsweise +/-1%, +/-5% oder +/-10% um den mittleren (durchschnittlichen) Impulsabstand $\tau$.

Das Modulationssignal zur Erzielung der genannten Impulsabstandsvariation kann beliebiger Art sein, z.B. ein Sinussignal, Dreiecksignal, Sägezahnsignal, Treppensignal, ein Datensignal mit eigenem Informationsgehalt usw. Bevorzugt ist das Modulationssignal ein statistisch zufälliges Signal wie weißes Rauschen. Mit einem solchen Zufallssignal wird die Impulswiederholungsrate $PRR_i$ bzw. der Impulsabstand $\tau_i$ in der Art eines zufälligen "Phasenjitters" der Sendeimpulse $S_m$ statistisch zufällig variiert. In bestimmten Grenzen kann ein solches Zufallssignal auch lediglich pseudozufällig sein, wie der später noch erörterte Barker-Code.

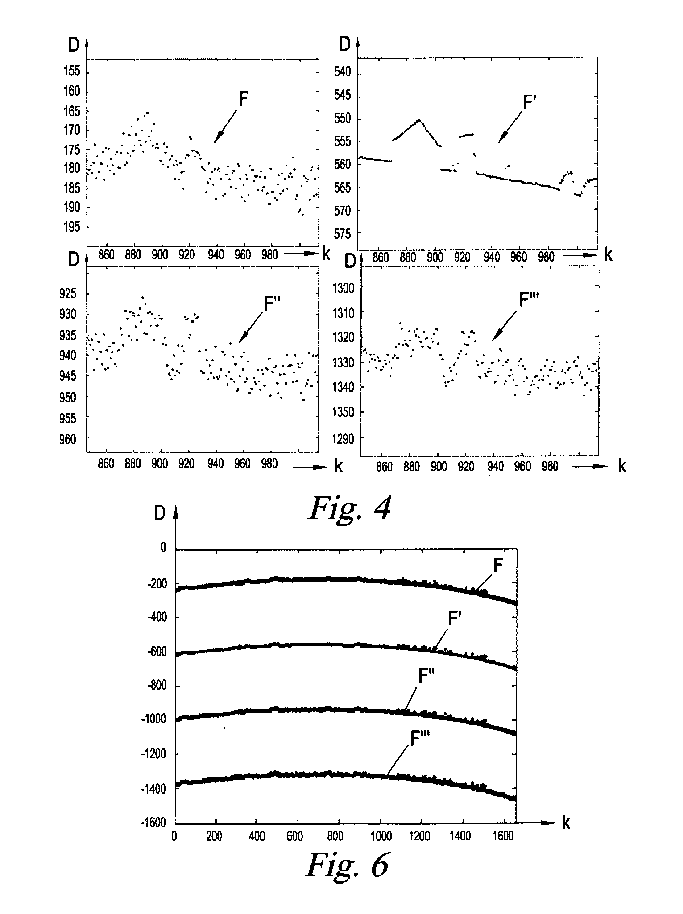

Aufgrund des durch die Modulation hervorgerufenen periodischen oder bevorzugt zufälligen Jitters der Zeitlagen $T_m$ der Sendeimpulse $S_m$ zeigen verschiedene Folgen F, F', F",... usw. von Entfernungsmesswerten $D_k$, $D_k'$, $D_k"$,... , welche für unterschiedliche Zuordnungen P, P', P",... erhalten werden, je nach MTA-Zonenlage Z, Z', Z",... der Umgebungsziele $U_i$ unterschiedliche Eigenschaften. Dies ist in Fig. 4 für vier verschiedene Zuordnungen P, P', P", P"' gezeigt, welche zu vier verschiedenen Entfernungsmesswertfolgen F, F', F", F"' von Entfernungsmesswerten $D_k$, $D_k'$, $D_k"$, $D_k"'$ geführt haben, die jeweils über ihrem Folgenindex (Zeitindex) k aufgetragen sind. Das Modulationssignal war im vorliegenden Fall ein Zufallssignal (Rauschsignal), und die Umgebungsziele $U_i$ lagen im vorliegenden Fall in der zweiten MTA-Zone Z'.

Wie aus Fig. 4 ersichtlich, schlägt sich das PRR- bzw. Impulsabstands-Modulationsrauschen in allen Folgen F, F', F", F"' mit Ausnahme der "richtigen" Entfernungsmesswertfolge F' nieder, d.h. die die korrekte MTA-Zone Z' wiedergebende Entfernungsmesswertfolge F' ist am geringsten von dem Modulationssignal beeinflusst.

Dies ist darauf zurückzuführen, dass die "richtige" Zuordnung P' jeweils die Laufzeiten $\Delta T_k'$ zwischen den Empfangsimpulsen $E_{n+1}$, $E_{n+2}$,... und ihren ursächlichen Sendeimpulsen $S_m$, $S_{m+1}$,... misst, ungeachtet der verjitterten Phasenlage $T_m$ des jeweiligen Sendeimpulses, wogegen die modulationsbedingten Phasenlagenvariationen bei "falschen" Zuordnungen P, P", P"' zu entsprechend modulierten bzw. (hier:) verrauschten "falschen" Laufzeiten $\Delta T_k$, $\Delta T_k"$, $\Delta T_k"'$ usw. führen. Somit kann durch signalanalytische Auswertung der Empfangsmesswertfolgen F, F', F", F"' die richtige MTA-Zone, hier Z', detektiert und damit das richtige Entfernungsmessergebnis, hier F', automatisch ermittelt werden.

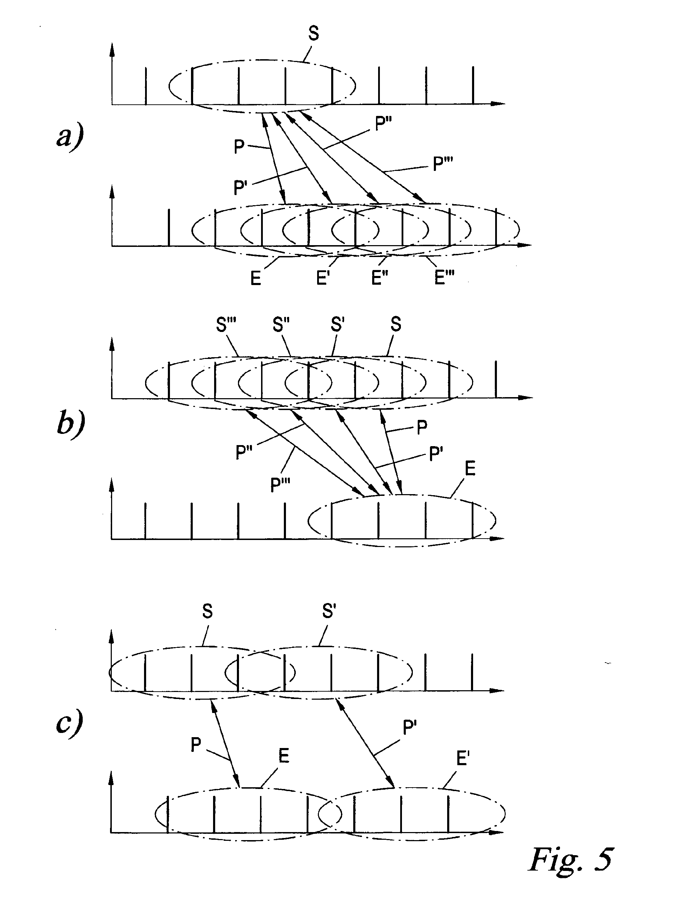

Gemäß Fig. 5 können grundsätzlich verschiedenste Zuordnungen bzw. Paarungen P, P', P",... gebildet werden, um verschiedenste potentielle Entfernungsmesswertfolgen F, F', F",... als Kandidatenfolgen für die anschließende Auswertung und Ermittlung der korrekten Entfernungsmesswertfolge zu erzeugen. Es ist dabei unbeachtlich, ob eine erste Folge S von Sendeimpulsen $S_m$ jeweils mit verschiedensten zweiten Folgen E, E', E",... von Empfangsimpulsen $E_n$ gepaart wird, siehe Fig. 5, oder eine erste Folge E von Empfangsimpulsen $E_n$ mit verschiedensten zweiten Folgen S, S', S",... von Sendeimpulsen $S_m$, siehe Fig. 5b, oder allgemein verschiedene Folgen S, S', S",... von Sendeimpulsen $S_m$ mit verschiedenen Folgen E, E', E",... von Empfangsimpulsen $E_n$, siehe Fig. 5c. Der zeitliche Abstand ("Offset") zwischen den Sende- und Empfangsimpulsfolgen einer Zuordnung P, P', P",... bestimmt - wie nachstehend erläutert - dabei jeweils die MTA-Zone Z, Z', Z",..., für welche die Zuordnung gilt.

Zurückkehrend auf Fig. 3 können die Zuordnungen P, P', P",... zwischen den Sendeimpulsen $S_m$ und den Empfangsimpulsen $E_n$ auf die folgende Art und Weise erstellt werden. Für die erste Zuordnung P werden dazu jene Empfangsimpulse $E_n$ berücksichtigt und jeweils ihrem vorangegangenen Sendeimpuls $S_m$ zugeordnet, die jeweils innerhalb eines ersten Zeitfensters $W_m$ nach dem betreffenden Sendeimpuls $S_m$ empfangen wurden. Fig. 3a zeigt beispielhaft drei erste Zeitfenster $W_m$, $W_{m+1}$, $W_{m+2}$, deren Länge jeweils etwa gleich dem durchschnittlichen Impulsabstand $\tau$ der Sendeimpulse $S_m$ ist und die jeweils direkt zum Sendezeitpunkt $T_m$ des betreffenden Sendeimpulses $S_m$ beginnen (oder gegebenenfalls um einen kleinen Wert $\Delta$ später, siehe unten). Somit werden die Laufzeiten $\Delta T_k$ und damit Entfernungsmesswerte $D_k$ der ersten Folge F jeweils zwischen einem Sendeimpuls $S_m$ und dem nächsten Empfangsimpuls $E_n$ gebildet. Dies ergibt die Zuordnung P zur Vermessung der ersten MTA-Zone Z.

Fig. 3b zeigt beispielhaft zwei Zeitfenster $W_m'$, $W_{m+2}'$ von zweiten Zeitfenstern $W_m'$, $W_{m+1}'$, $W_{m+2}'$,..., die gegenüber den ersten Zeitfenstern $W_m$, $W_{m+1}'$, $W_{m+2}'$,... um etwa einen durchschnittlichen Impulsabstand $\tau$ der Sendeimpulse $S_m$ versetzt sind. Die zweiten Zeitfenster $W_m'$, $W_{m+1}'$, $W_{m+2}'$,... haben wieder etwa die Länge eines durchschnittlichen Impulsabstandes $\tau$ und

beginnen jeweils in einem vorgegebenen Abstand (Offset) Off' zu den Sendezeitpunkten $T_m$, $T_{m+1}$, $T_{m+2}$,... der Sendeimpulse $S_m$, $S_{m+1}$, $S_{m+2}$,..., auf die sie bezogen sind. Die in den zweiten Zeitfenstern $W_m'$, $W_{m+1}'$, $W_{m+2}'$,... einlangenden Empfangsimpulse $E_{n+1}$, $E_{n+2}$, $E_{n+3}$,... bilden die zweite Folge E', und die Laufzeiten $\Delta T_k'$ bezüglich der genannten vorletzten Sendeimpulse $S_m$, $S_{m+1}$, $S_{m+2}$,... und damit Entfernungsmesswerte $D_k'$ bilden die zweite Folge F' zur Vermessung der zweiten MTA-Zone Z'.

Der vorgegebene Abstand Off, Off', Off",... zwischen den Sendeimpulsen $S_m$ und den Startzeitpunkten der jeweiligen Zeitfenster $W_m$, $W_m'$, $W_m''$,... für die den Sendeimpulsen $S_m$ jeweils zuzuordnenden Empfangsimpulse $E_n$ beträgt bevorzugt ein ganzzahliges Vielfaches des durchschnittlichen Impulsabstandes $\tau$, gegebenenfalls erhöht um einen kleinen Wert $\Delta$, um zu erreichen, dass die Zeitfenster zwischen den Sendeimpulsen $S_m$ zu liegen kommen, um Störeinflüsse von Sendeimpulsen $S_m$ auf eine Empfangselektronik für die Empfangsimpulse auszuschließen. Bevorzugt ist somit der vorgegebene Abstand Off für die Zuordnung P gleich $0 \cdot \tau + \Delta$, der Abstand Off' für die Zuordnung P' gleich $1 \cdot \tau + \Delta$, der Abstand Off" für die Zuordnung P" gleich $2 \cdot \tau + \Delta$, usw. usf.

Durch die Berücksichtigung nur jener Empfangsimpulse $E_n$, welche in die entsprechenden Zeitfenster $W_m$, $W_m'$, $W_m''$,... fallen, können Lücken in den Empfangsfolgen E, E', E",... die auf "verlorene", z.B. von nichtreflektierenden Zielen "verschluckte" Sendeimpulse $S_m$ zurückzuführen sind, berücksichtigt werden: In diesem Fall gibt es zu einem Sendeimpuls $S_m$ keinen Empfangsimpuls $E_n$ im betrachteten Zeitfenster $W_m$, $W_m'$,... damit auch keine bestimmbare Laufzeit $\Delta T_k$, $\Delta T_k'$,... und keinen Entfernungsmesswert $D_k$, $D_k'$,.... Solch fehlende einzelne Entfernungsmesswerte in den Folgen F, F', F",... sind bei deren statistischer Auswertung statistisch nicht signifikant, d.h. führen zu keiner signifikanten Beeinträchtigung des Auswertungsergebnisses.

Fig. 6 zeigt die Entfernungsmesswertfolgen F, F', F", F"' von Fig. 5 nochmals über eine größere Anzahl von Indizes k bzw. einen längeren Zeitraum in Zusammenschau bzw. paralleler Darstellung. Wieder ist erkennbar, dass die zweite Entfernungsmesswertfolge F' am geringsten verrauscht ist, d.h. den geringsten Einfluss durch das Modulationssignal (hier: Rauschen) zeigt.

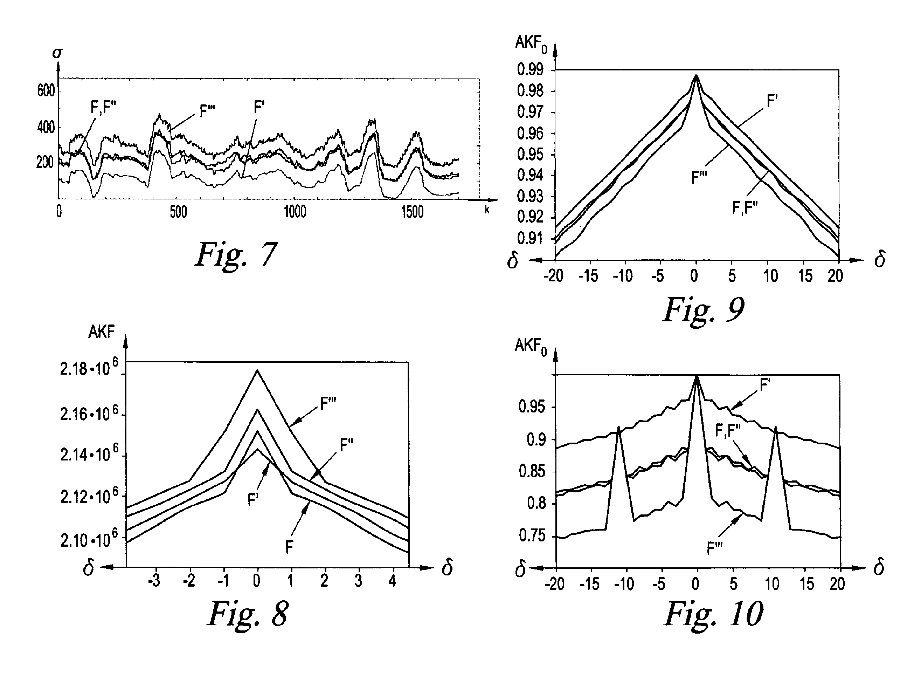

Auf die Kandidaten-Entfernungsmesswertfolgen F, F', F", F"' kann anschließend jedes in der Technik bekannte Signalanalyseverfahren angewandt werden, um die vom Modulationssignal geringstbeeinflusste, z.B. am geringsten verrauschte, Entfernungsmesswertfolge F' als korrektes Entfernungsmessergebnis der Umgebungsziele $U_i$ zu ermitteln. Die Fig. 7 bis 10 zeigen einige Varianten dafür geeigneter Auswerteverfahren.

Fig. 7 zeigt eine Analyse der Entfernungsmesswertfolgen von Fig. 6 durch Berechnen einer gleitenden Standardabweichung $\sigma$ über ein gleitendes Zeitfenster von z.B. 100 Messwerten. Die Standardabweichung $\sigma$ zeigt ein mittelwertbereinigtes Energiemaß der Folgen F, F', F", F"', wobei die Folge F' mit der geringsten Signalenergie als Messergebnis ausgewählt wird. Es versteht sich, dass auch andere Energiemaße als eine Standardabweichung verwendet berechnet werden können; die Energieanalyse beruht auf dem Postulat, dass jedwedes am Anfang in die Sendeempfangsimpulse $S_m$ eingespeiste Modulationssignal stets zu einer detektierbaren Energieerhöhung der dadurch verjitterten Entfernungsmesswertfolgen F, F", F"' führt.

Fig. 8 zeigt die Berechnung von Autokorrelationsfunktionen AKF der Entfernungsmesswertfolgen F, F', F", F"' des Beispiels von Fig. 6 über dem Autokorrelations-Versatzindex $\delta$. Die Autokorrelation bei $\delta = 0$ ist wieder ein Maß für die Signalenergie der Entfernungsmesswertfolge, und die Entfernungsmesswertfolge F' mit der geringsten Autokorrelation AKF($\delta = 0$) ist das korrekte Messergebnis.

Fig. 9 zeigt auf die Signalenergie normierte Autokorrelationsfunktionen $AKF_0$ der Entfernungsmesswertfolgen F, F', F", F"' des Beispiels von Fig. 6. Bei einem vorgegebenen Autokorrelations-Versatzindex $\delta$ ungleich Null, z.B. $\delta = 5$, ist die Autokorrelation der einzelnen Folgen unterschiedlich: Die korrekte Entfernungsmesswertfolge F' ist - da sie am wenigsten von der PRR- bzw. Impulsabstands-Modulation beeinflusst ist - "sich selbst am ähnlichsten" und hat damit bei $\delta \neq 0$ die höchste Autokorrelation $AKF_0$ im Vergleich zu allen anderen, "falschen" Entfernungsmesswertfolgen F, F", F"'.

Fig. 10 zeigt dieselbe Autokorrelationsauswertung wie Fig. 9 bei Verwendung eines Pseudozufallssignales anstelle eines Rauschsignals, hier eines Barker-Codes der Codelänge elf (+1 +1 +1 -1 -1 -1 +1 -1 -1 +1 -1) als Modulationssignal. Zwischen den Codewiederholungsstellen, d.h. den Vielfachen der Codelänge elf, ist der Signalabstand (die Separation) zwischen den Autokorrelationswerten der einzelnen Folgen erhöht. Bei einem etwa in der Mitte der Codelänge liegenden Autokorrelations-Versatz $\delta = 5$ kann damit die korrekte Folge F' leichter von den anderen Folgen F, F", F"' separiert und detektiert werden als bei der Variante von Fig. 9.

Eine weitere Variante der Auswertung der Entfernungsmesswertfolgen F, F', F", F"' besteht darin, jede Folge mit dem Modulationssignal kreuzzukorrelieren. Die Folge mit der geringsten Kreuzkorrelation ist jene, in welcher sich die Modulation am wenigsten niederschlägt, und damit das korrekte Entfernungsmessergebnis.

Noch eine weitere Variante besteht darin, die Entfernungsmesswertfolgen F, F', F", F"' frequenzzuanalysieren, beispielsweise mittels FFT (Fast Fourier Transformation), um bekannte Frequenzen des Modulationssignals darin zu detektieren oder einfach nur um das Ausmaß an hochfrequenten Anteilen in den Folgen zu bestimmen. Letztere Variante beruht auf der Annahme, dass Rauschmodulationen, Barker-Code-Modulationen usw. zu verstärkten hochfrequenten Anteilen in den "falschen" Entfernungsmesswertfolgen führen. Die Folge mit den geringsten hochfrequenten Anteilen wird anschließend als korrektes Entfernungsmessergebnis ausgewählt.

Die Erfindung ist nicht auf die dargestellten Ausführungsformen beschränkt, sondern umfasst alle Varianten und Modifikationen, die in den Rahmen der angeschlossenen Ansprüche fallen.

**Patentansprüche**

1. Verfahren zur Entfernungsmessung von Umgebungszielen durch Laufzeitmessung von daran reflektierten Impulsen, insbesondere Laserimpulsen, umfassend:

   Aussenden von Impulsen (2) mit einem Impulsabstand ($\tau$), der entsprechend einem Modulationssignal variiert wird, als Sendeimpulse ($S_m$) und begleitendes Aufzeichnen der reflektierten Impulse als Empfangsimpulse ($E_n$),
   Bestimmen einer ersten Folge (F) von Entfernungsmesswerten ($D_k$) aus Laufzeiten ($\Delta T_k$) zwischen Sendeimpulsen ($S_m$) und solchen Empfangsimpulsen ($E_n$), die jeweils innerhalb eines ersten Zeitfensters ($W_m$) nach jedem Sendeimpuls ($S_m$) empfangen werden, und
   Bestimmen zumindest einer zweiten Folge (F') von Entfernungsmesswerten ($D_k'$) aus Laufzeiten ($\Delta T_k'$) zwischen Sendeimpulsen ($S_m$) und solchen Empfangsimpulsen ($E_n$), die jeweils innerhalb eines zweiten Zeitfensters ($W_m'$) nach jedem Sendeimpuls ($S_m$) empfangen werden, und
   Ermitteln jener Folge (F') von Entfernungsmesswerten ($D_k'$), welche durch das Modulationssignal am geringsten beeinflusst ist, als Ergebnis der Entfernungsmessung.

2. Verfahren nach Anspruch 1, **dadurch gekennzeichnet, dass** die Länge der ersten und zweiten Zeitfenster ($W_m$, $W_m'$) jeweils etwa gleich dem durchschnittlichen Impulsabstand ($\tau$) der Sendeimpulse ($S_m$) ist.

3. Verfahren nach Anspruch 1 oder 2, **dadurch gekennzeichnet, dass** die ersten und zweiten Zeitfenster ($W_m$, $W_m'$) zueinander jeweils um etwa ein ganzzahliges Vielfaches des durchschnittlichen Impulsabstandes ($\tau$) der Sendeimpulse ($S_m$) versetzt sind.

4. Verfahren nach einem der Ansprüche 1 bis 3, **dadurch gekennzeichnet, dass** das Modulationssignal ein Zufallssignal ist.

5. Verfahren nach einem der Ansprüche 1 bis 3, **dadurch gekennzeichnet, dass** das Modulationssignal ein Pseudozufallssignal ist.

6. Verfahren nach Anspruch 5, **dadurch gekennzeichnet, dass** das Modulationssignal auf einem Barker-Code beruht.

7. Verfahren nach einem der Ansprüche 1 bis 6, **dadurch gekennzeichnet, dass** das Ermitteln der geringstbeeinflußten Folge (F') durch Berechnen von Signalenergien ($\sigma$) der Folgen (F, F', F", F"') und Auswählen der Folge mit der geringsten Signalenergie erfolgt.

8. Verfahren nach einem der Ansprüche 1 bis 6, **dadurch gekennzeichnet, dass** das Ermitteln der geringstbeeinflußten Folge (F'), durch Berechnen von Autokorrelationen (AKF) der Folgen (F, F', F", F"') und Auswählen der Folge mit der höchsten Autokorrelation erfolgt.

9. Verfahren nach einem der Ansprüche 1 bis 6, **dadurch gekennzeichnet, dass** das Ermitteln der geringstbeeinflussten Folge (F') durch Berechnen von Kreuzkorrelationen der Folgen (F, F', F", F"') mit jeweils dem genannten Modulationssignal und Auswählen der Folge mit der geringsten Kreuzkorrelation erfolgt.

10. Verfahren nach einem der Ansprüche 1 bis 6, **dadurch gekennzeichnet, dass** das Ermitteln der geringstbeeinflussten Folge (F') durch Frequenzanalysieren der Folgen (F, F', F", F"') und Auswählen der Folge mit den geringsten hochfrequenten Anteilen erfolgt.

11. Verfahren nach einem der Ansprüche 1 bis 10, wobei die Sendeimpulse ($S_m$) fortlaufend auf dasselbe Umgebungsziel ($U_i$) gerichtet werden.

12. Verfahren nach einem der Ansprüche 1 bis 10 zum Laserscannen, wobei die Sendeimpulse ($S_m$) Laserimpulse sind und fortlaufend auf verschiedene Umgebungsziele ($U_i$) gerichtet werden.

**Claims**

1. A method for measuring distances of targets by measuring the time of flight of pulses, in particular laser pulses, reflected on those targets, comprising:

   transmitting pulses (2) having a pulse interval ($\tau$) which varies according to a modulation signal as transmitted pulses ($S_m$), and concomitantly recording of reflected pulses as received pulses ($E_n$);
   determining a first series (F) of distance measurement values ($D_k$) from times of flight ($\Delta T_k$)

between transmitted pulses ($S_m$) and those received pulses ($E_n$) which are respectively received within a first time window ($W_m$) following each transmitted pulse ($S_m$); and

determining at least a second series (F') of distance measurement values ($D_k$') from times of flight ($\Delta T_k$') between transmitted pulses ($S_m$) and those received pulses ($E_n$) which are respectively received within a second time window ($W_m$') following each transmitted pulse ($S_m$); and

determining that series (F') of distance measurement values ($D_k$') which is least affected by the modulation signal as result of the distance measurement.

2. The method according to claim 1, **characterized in that** the length of the first and second time windows ($W_m$, $W_m$') is approximately equal to the average pulse interval ($\tau$) of the transmitted pulses ($S_m$).

3. The method according to claim 1 or 2, **characterized in that** the first and second time windows ($W_m$, $W_m$') are offset to one another by approximately an integer multiple of the average pulse interval ($\tau$) of the transmitted pulses ($S_m$).

4. The method according to one of the claims 1 to 3, **characterized in that** the modulation signal is a random signal.

5. The method according to one of the claims 1 to 3, **characterized in that** the modulation signal is a pseudorandom signal.

6. The method according to claim 5, **characterized in that** the modulation signal is based on a Barker code.

7. The method according to one of the claims 1 to 6, **characterized in that** the least affected series (F') is determined by calculating signal energies ($\sigma$) of the series (F, F', F", F''') and selecting the series having the lowest signal energy.

8. The method according to one of the claims 1 to 6, **characterized in that** the least affected series (F') is determined by calculating autocorrelations (AKF) of the series (F, F', F", F''') and selecting the series having the highest autocorrelation.

9. The method according to one of the claims 1 to 6, **characterized in that** the least affected series (F') is determined by calculating cross-correlations of the series (F, F', F", F''') with the aforementioned modulation signal and selecting the series having the lowest cross-correlation.

10. The method according to one of the claims 1 to 6, **characterized in that** the least affected series (F') is determined by frequency-analyzing of the series (F, F', F", F''') and selecting the series having the smallest high-frequency components.

11. The method according to one of the claims 1 to 10, wherein the transmitted pulses ($S_m$) are continuously directed to the same target ($U_i$).

12. The method according to one of the claims 1 to 10 for laser scanning, wherein the transmitted pulses ($S_m$) are laser pulses and are progressively directed to different targets ($U_i$).

**Revendications**

1. Procédé de mesure de distances pour des objets dans l'environnement par la mesure du temps de propagation d'impulsions s'y réfléchissant, notamment d'impulsions laser, comprenant :

l'émission d'impulsions (2), constituant les impulsions d'émission ($S_m$), avec un intervalle d'impulsions ($\tau$), qui est varié en fonction d'un signal de modulation, et l'enregistrement correspondant des impulsions réfléchies, constituant les impulsions de réception ($E_n$),

la détermination d'une première séquence (F) de valeurs de mesures de distances ($D_k$) à partir des temps de propagation ($\Delta T_k$) entre des impulsions d'émission ($S_m$) et des impulsions de réception ($E_n$), telles que celles qui sont, chacune, reçues dans une première fenêtre temporelle ($W_m$) après chaque impulsion d'émission ($S_m$), et

la détermination d'au moins une deuxième séquence (F') de valeurs de mesures de distances ($D_k$') à partir de temps de propagation ($\Delta T_k$') entre des impulsions d'émission ($S_m$) et des impulsions de réceptions ($E_n$), telles que celles qui sont, chacune, reçues dans une deuxième fenêtre temporelle ($W_m$') après chaque impulsion d'émission ($S_m$), et

la recherche de la séquence (F') de valeurs de mesures de distance ($D_k$') qui est le moins affectée par le signal de modulation, constituant le résultat de la mesure de la distance.

2. Procédé selon la revendication 1, **caractérisé en ce que** les longueurs de la première et de la deuxième fenêtre temporelle ($W_m$, $W_m$') sont, chacune, environ égales à l'intervalle d'impulsion ($\tau$) moyen des impulsions d'émission ($S_m$).

3. Procédé selon les revendications 1 ou 2, **caractérisé en ce que** les première et deuxième fenêtres temporelles ($w_m$, $W_m$') sont, chacune, décalées l'une par rapport à l'autre d'environ un multiple entier de l'in-

tervalle d'impulsion moyen ($\tau$) des impulsions d'émission ($S_m$).

4. Procédé selon l'une des revendications 1 à 3, **caractérisé en ce que** le signal de modulation est un signal aléatoire.

5. Procédé selon l'une des revendications 1 à 3, **caractérisé en ce que** le signal de modulation est un signal pseudo-aléatoire.

6. Procédé selon la revendication 5, **caractérisé en ce que** le signal de modulation est basé sur un codage de Barker.

7. Procédé selon l'une des revendications 1 à 6, **caractérisé en ce que** la recherche de la séquence (F') la moins affectée est réalisée par le calcul des énergies de signaux ($\sigma$) des séquences (F, F', F", F''') et par la sélection de la séquence possédant l'énergie de signal la plus faible.

8. Procédé selon l'une des revendications 1 à 6, **caractérisé en ce que** la recherche de la séquence (F') la moins affectée est réalisée par le calcul d'auto-corrélations (AKF) des séquences (F, F', F", F''') et par la sélection de la séquence possédant la plus forte auto-corrélation.

9. Procédé selon l'une des revendications 1 à 6, **caractérisé en ce que** la recherche de la séquence (F') la moins affectée est réalisée par le calcul de corrélations croisées des séquences (F, F', F", F''') avec respectivement ledit signal de modulation et par la sélection de la séquence possédant la corrélation croisée la plus faible.

10. Procédé selon l'une des revendications 1 à 6, **caractérisé en ce que** la recherche de la séquence (F') la moins affectée est réalisée par une analyse des fréquences des séquences (F, F', F", F''') et la sélection de la séquence possédant la proportion de hautes fréquences la plus faible.

11. Procédé selon l'une des revendications 1 à 10, dans lequel les impulsions d'émission ($S_m$) sont orientées constamment sur la même cible de l'environnement ($U_i$).

12. Procédé selon l'une des revendications 1 à 10, destiné à un balayage laser, dans lequel les impulsions d'émission ($S_m$) sont des impulsions laser et sont constamment orientées sur des cibles de l'environnement ($U_i$) différentes.

Fig. 1

(Stand der Technik)

Fig. 2

(Stand der Technik)

EP 2 694 996 B1

*Fig. 3*

*Fig. 4*

*Fig. 6*

*Fig. 5*

Fig. 9

Fig. 10

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020413720 A1
- EP 1413896 A2

- EP 19952552 A1